# EUROPEAN PATENT APPLICATION

(11) **EP 1 459 839 A1**
(43) Date of publication of application: **22.09.2004**
(21) Application number: 03425175.1
(22) Date of filing: 19.03.2003
(51) Int. Cl.: B23Q 11/00, B23Q 11/10

(54) **Plant for shavings processing and for the oil recovery**

(71) Applicant: Cem di Cimini Nicola, 41013 Castelfranco Emilia (Modena) (IT)
(72) Inventor: Cimini, Nicola, 41013 Castelfranco Emilia (Modena) (IT)
(74) Representative: Paolini, Elena

(57) **Abstract**

The plant provides an aspiration pipe (2) and an aerial piping (4) which bring waste with oil, aspired from a collecting tank, into a silo (12) having at its lower end a dosing chamber (34) closed with a plate (35). The opening of said plate (35) is controlled by a sensor (20) so that the waste with the oil can fall down inside a holed basket (43) where centrifugation takes place. The oil passes through a pipe (50) and arrives at a first tank (52) and then, through a second pipe (56), to a bigger tank. At the end of the centrifuging phase the waste without oil arrives, through a pipe (62), at a second silo (68) with an opening (70) from which the waste without oil can fall down into a container (75).

## Description

In the machining where machine tools are used is normal to utilize oils for the cooling of the tool and of the workpiece. Said oil determines the refrigeration of the working parts and in the same time it carries away the metallic minute parts or the other materials that are created during the working phases. The working waste products are so englobed to the oil for falling in a second time into the working plane. The machine tools during and at the end of the working creates metallic-shavings or metallic minute parts. The worked parts are bathed to the lubricating oil having the caracteristic to posses polar groups with anchoring function onto the surfaces and with molecular structures such that to render it colloidal. It is known that the machinery that create metallic-shavings during the working phases are gear cutters, shapers, planers, slotters, band saw machines or hacksaw machines, lathes and the broaching machines. Common characteristic of this kind of machines is the tool rectilinear motion. Moreover also the reamers, the milling machines, the threading machines, the circular saw machines, the tapping machines and the drilling machines create similar working waste products but these machines have the tools with circular motion.

Other kind of machines have instead tool with combined motion, or rather motion given to the union of the rectilinear motion and of the circular one, like the shaving machines, the gear shapers and the jig borers. Then there are machines that mainly during the workings create dust of metallic minute parts of different sizes instead of metallic shavings. These machines, with circular motion of the tool, are the surface grinders, the centerless grinders, the grinders, the cutting-off machines and the grinders. For workings with tool rectiliner use are utilized the lapping machines and the electromachining machines. Always creating mainly dust or shavings of small dimensions in the working waste products are the machines for grinding and for gear workings having the combined motion of the tool, i.e. circular motion and rectiliner one. All these machines, i.e. in general the machines with cooling liquid to the tool and to the workpiece, use during the working oil, known as "cutting oil". The used oil has own characteristic to inglobe or to unite with the working waste products formed during the different phases. The oil together with the waste then fall onto the working plane and then they flow into collecting ducts so to reach a collecting tank.

This tank to be periodically cleared out in a second tank of bigger dimension. Said emptying, manually made by an operator, is actuated at the end of the workings. Moreover are placed at the end part of the collecting ducts and before the entrance of the collecing tank, grids so to separe the working waste products, i.e. the shavings and the metallic minute parts, to the oil. The separation between oil and metallic parts is consequently coming for gravitational falling of the oil to the waste, i.e. for flowing of the oil film to the waste. This method of oil collecting and of separation of the metallic parts gives a lot of drawbacks and first of all the scanty efficiency in the separation of the oil from the metallic parts. The used oil infact has like intrinsic property that to be studied and realiz ed so to have characteristics of tack to the surfaces and consequently it remains for the bigger part attached to the waste. Consequently waste bathed in oil are obtained and little oil inside the collect ing tank, i.e. there is little efficiency in realizing the separation of these two elements. It is consequently no possible realize a differentiated disposal of the oil and of the waste in correct way, such us the waste are oil bathed and in the same way the oil inside the collecting tank is in limited quantity. So the recovering of the oil, i.e. of the major cost element, is scanty because the bigger part of it remains attached to the waste. Considering then that said oil can be filtered to be used in other workings, the loss of a big part with the waste comes to be an antieconomical operation. Morever the periodical manual working to empty the collecting tank and of the following deposition of the recovered oil inside the bigger tank and of the cleaning of the filters present a lot of drawbacks like loss of working hours of the operator acting to the workings with the machine tool, the possible loss of oil on the floor and problems hygiene on the working place given to the oil nebulization due to the use of compressed air during the cleaning of the filters of the containers. In addition to the cited methods, i.e. these kinds of collecting with duct and tank, other apparatuses are known equipped with a sole body with aspiration apparatus and container for shavings. Ending the aspiration of the shavings with oil, this combined material is positioned inside a container having in its end part grids to separe the oil from the working waste products. In this way is actuated inside the same container the collecting and the separation of the two elements. This method has the same problems of the previous apparatus such as is limit the separation between oil and waste. Shavings completly bathed in the oil are obtained at the end of the separation process also the same are left for long time inside the container with filters. Moreover these apparatuses must be periodically manually cleaned, the collecting oil must be put in containers of bigger dimension with possibility accidental loss of oil and time loss to the operator of the machine tool for making this operation and for cleaning the filters. The invented plant is first of all able to determine the separation of the oil from the waste with high efficiency, it is a plant completely automatized, i.e. it does not need an operator in the described phases of collecting of the oil in the different containers and there are not losses of oil such as the same is brought inside a hermetic seal container without loss. Moreover the oil collect ing permit to pay the initial investment due to the plant cost such as, the high efficiency in the separation of the oil from the waste permits to have a reuse or a sell of the oil with an advantage for the economicity of the production cycle. The invented plant provides a rubber suction hose 1 connect ed with a rubber flexible intake pipe 2. Said rubber pipe 2 is connected at the other end with a ball valve 3 connected to the aerial inox piping 4 placed, by means of supports 5, over a sole machine tool or over more machine tools. To the aerial piping 4 a metallic support part 6 is connected for the supporing of the intake pipe 2 and of the suction hose 1. Said elements are fitted in on a support body 7 placed on the free end of the support part 6. The support body 7, on which the suction hose 1 and the pipe 2 are positioned, is easily opening from the operator and, take it away from said position, it can be used in the area where the aspiration is requested or it is placed directly near the tool.

On the metallic support part 6, near the support body 7, a sensor 8 is placed for detecting the presence or air in the pneumatic circuit and connected with cables 9 to the electrovalve 10 and to the other electric part of the plant. Said elements, i.e. the electrovalve 10, the sensor 8 and the cables 9, are placed onto the support part 6. The electrovalve 10 has the function to activate or disactivate the double acting cylinder 11 fed with the compressed air coming from the outside circuit to open or close the ball valve 3. When the working waste products are forming, the operator takes the suction hose 1 from the support body 7 and, with wanted activation delay, actuates the aspiration of the oil together with the shavings while the machine tool is functioning or said aspiration is made in a second time. In this way the waste and the oil are aspired from the collecting tank positioned under working plane where arrived the collecting ducts. The oil with the waste are sucked up passing from the suction hose 1 to the flexible pipe 2 and to the valve 3 then to go on into the aerial inox piping 4. All components placed downstream' to the aerial piping 4, i.e. all the cited components and placed after the branch of the aerial piping 4, are to be used for more tool machines that made waste with oil. The aerial inox piping 4, placed on the base of the necessities of one or more tool machines, with the needed branches is connected with a silo 12 through a flange 13 and bolts 14 to the aspiration inlet 15. Said silo 12 provides on the top vertical walls whereas in the lower part has walls 16 with a big slop met into a cone to the under opening and with a support frame 17 and with an upper appendice 18 for the support of the aspiration plant 19. In the final part of the silo 12, at a high determined to the mass of the waste to work, is present a metallic sensor 20 connected to the electric part of the plant. The silo 12 is characterized to a second opening 21, connected to a flexible pipe 22 with a suction hose 23 and sensor 24, for the upkeep or the cleaning of the plant that, normally closed, is put in work in the case of a long stop of the plant, for the cleaning of possible infiltrated sostances or the the normal upkeep cleaning. Onto the silo 12 is moreover present an electric motor of small power with rubber eccentric cam 25 actuating a percussion on the walls of the silo 12 so to avoid the deposit of the sucked up material onto the walls of the same silo and to favourire the flow toward the collecting coned part lower placed. The intake plant 19 comprises an electric motor 26 connected with vacuum pump 27.Said plant 19 to form, in starting, a big depression able to suck up the oil and the waste from the tool machine or from the collecting containers. On the pipe 28 of connection between the intake plant and the silo 12 is present a non return check valve withfilter 29 to avoid to put polluting in the air coming from the pneumatic circuit and to do flow the air present in the same circuit. After the aspiration is made, the oil and the waste arrive in the lower part of the silo 12 where the sensor 20 detects the necessary quantity and sufficient for the going on of the working phases. The sensor 20, connected to the electric and logic parts of the plant, determines the opening and the closing of the silo 12. Said opening or closing are actuated by means of a plate 30. Said plate 30 moves horizontally inside the "L" guides 31 actuating the opening or the closing of the silo 12. The traslation movement is started from the double acting cylinder 32 fed from compressed air coming from the outside circuit of the plant and it is connected to the plate with connecting elements 33. When the electric and logic parts of the plant determine the opening, the waste and the oil arrive into a cylindrical chamber 34, i.e. into a dosing chamber placed in continuity with the silo 12, lowering closed by a second plate 35 orizonally moving and egual to the plate 30. Said plate 35 moves on "L" guides 36 and is moved to a double acting cylinder 37 fed to the compressed air coming from the outside circuit of the invented plant.

The double acting cylinder 37 is connected to the plate through connecting components 38. Both the double acting cylinders 32 and 37are connected to the electric part of the plant and are connected with their fixed part with the silo 12.

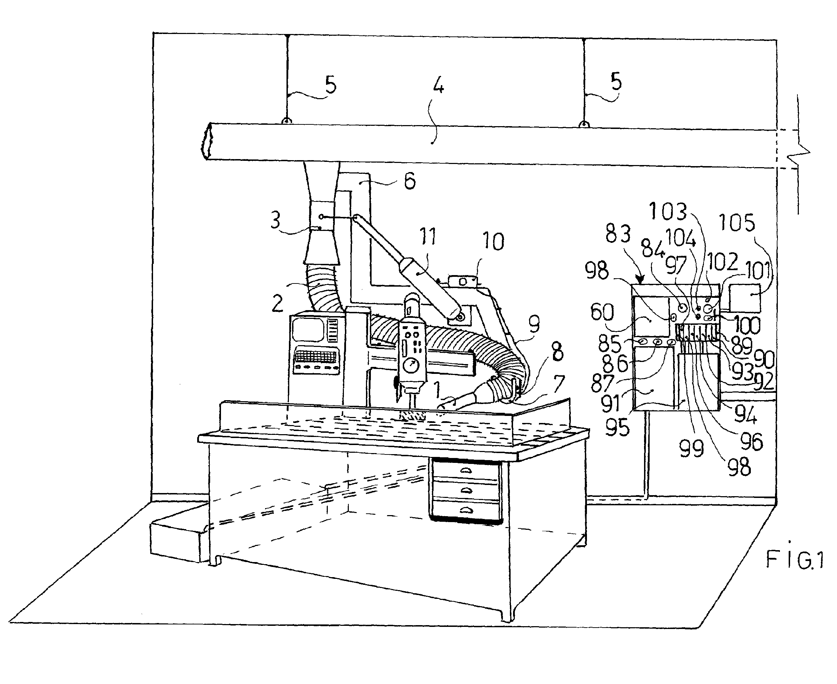

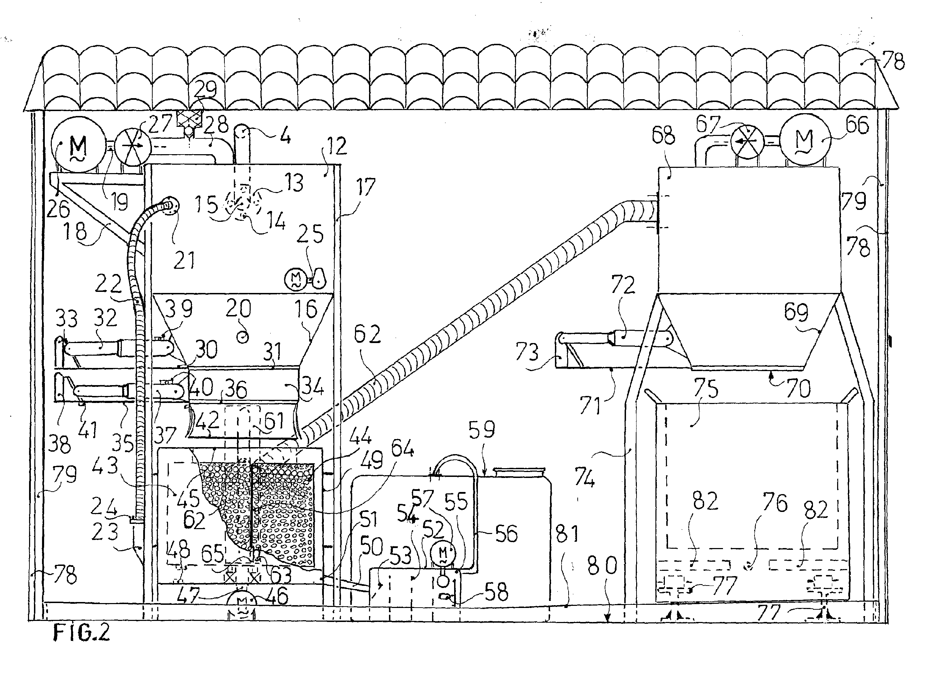

When the waste with the oil have arrived into the dosing chamber 34 in the wanted quantity and with times given to the quantity to work, the plant eletric part, started to the sensor 20, brings in opening, acting on the cylinder 37, the plate 35. Morever both the cilynders 32 and 37 are equipped with electrovalves 39 and 40 for the closing and the opening and on the cylinder 37 is present a sensor 42 detecting the position connected, like the other elements, with the electric part. At the exit of the dosing chamber 34 are present on the border line rubber bands 42 so to avoid the exit of waste or sprinkles when the plate 35 is opened. At the opening of said plate infact the waste with oil fall inside the basket 43 with holes 44 placed onto all its surface and with central hole 45 where the material to be worked enters. The basket has pins which permit the rotation where said rotation is started through an electric motor 46 connected by a drive shaft 47 to the basket. Moreover said basked provides a sensor 48 to detect the basket upset and connected to the electric part. Outside to the basked 43 a containing tank 49 is placed connected to the support frame 17 and with hermetic seal vertical walls and bottom. It has also a centrifuged oil collecting pipe 50 and a hole 51 placed onto the pipe and in the bottom of the containing tank 49 of the holed basket. The electricmotor 46 starts the holed basket 43 with in its inside the waste and the oil. The rotation of the basket 43 permits, centrifuging the materials, to devide the oil from the waste with a very high efficiency. The centrifuged force actuated on the material and the rotation of the waste during the motion of the holed basket 43, with the right material quantity to work, to avoid that a too big mass of the material do not permit the oil to flow outside the basket 43, permit a very good extraction of the oil, action not actuated with the known methods and from the prior art. The extracted oil flows to the inside part of the containing tank 49 to the flexibile piping 50 into a tank 5. Inside said tank 52 a small trash screen 53 is provided to the exit of the pipe 50 and vertical plates 54 with upper part opened for a filtering of the minute parts which remain on the bottom. On upper part of the tank 52 an opening 55 with pipe 56 and with electric motor 57 are present to pump when the sensor 58 signals the too high filling up of the oil inside the tank 52 and to pass the oil inside a bigger container 59. The oil, coming in the bigger container 59, filtered to the waste, is to be sold or, in a particular version of the plant, is to be reused to the machine tool. These kinds of oil provide a use till three reusings. The reusing of the oil in a closed circuit is actuated with the adding of a return pipe from the bigger container 59 to the tool and to the workpiece with pumping made to the electric motor. At the end of the centrifuging phase with rotation of the basket 43, driven to the electric and logic parts of the plant, in particular to the inverter 60 which determines the starting, the acceleration and the decelaration of the basket with particular mode for each phase, the basket 43 is emptied from the waste. This phase is necessary for the good working of the plant and to have always a good efficiency in the oil extraction. In the end phase of the centrifugal, i.e. when the basket 43 slowly rotates, from the central hole 45 of the basket and from the hole 51 of the containing tank 49, with wanted delay, is activated an electric cylinder 61 with intake pipe 62 and longitudinal opening 63. Long the opening 63 of said pipe 62, to "L" placed, is positioned a steel foil 64 laping the inside wall of the basket 43 so to scrape the waste to the vertical wall and to the bottom of the basket 43. During the vertical translation of the steel foil 64, actuated to the electric cylinder 61 and at the end motion to the bottom of the basket 43, with the high aspiration of the pipe 62 is actuated the cleaning of the basket from the waste. At end of stroke of the electric cylinder 61 a position sensor 65 is present connected with the electric and logic part of the plant. The aspiration to the pipe 62 is given trough an electric motor 66, fed on network and connected with the electric part of the plant,with vacuum pump 67. The worked waste without oil from the basket 43, through the aspiration pipe 62, arrive to a second silo 68 by means of the aspiration actuates to the electric motor 66with vacuum pump 67. Said silo 68, similar to the silo 12, provides in its lower part wall 69 with high slant and with a lower opening 70 with plate 71 where the opening or the closing is driven to a double acting cylinder 72 fed to the pneumatic circuit outside the plant and connected with the electric and logic part. These last elements, i.e. the logic and electric part of the plant, determine the opening or not of the plate 71 connected with connecting means 73 to the double acting cylinder72. Said double acting cylinder is connected to the silo 68 in its fixed part. Moreover the silo 68 is placed in superelevation with support frame 74 and having, under its lower opening 70, a container 75 opening on the top for the load of the waste. Said container 75 placed under the silo 68 provides sensors 76 to signal the good positioning and it has lower rails 77 for its movement outside the covering structure 78 with insulating materials 79 placed to protect the silo 12 and 68 and also the other connected components. Said covering structure 78 with insulating materials 79 has also the function of insulation of all the inside parts. Moreover the plant, placed inside the covering structure, provides a bottom onto the floor 80 with border 81 to contain the oil in the case of the breaking of one of the containers or one of the pipes with a capacity till three time plus the bigger dimension tank. The container 75 provides moreover a recess 82 to the transport with mechanical means. The plant then provides electric and logic parts placed inside the control board 83 and connected to the different elements by means of cables. Inside the control board 83 is present a push-button 84 connected to the aspiration plant with relay 85. The plant is started by this push-button if the sensor detects the presence of atmosferic pression air in the pneumatic circuit and if the termic relays 86 do not detect the presence of overloads on the electric c motors due to superheatings. The plant then provides a relay 87 that does not give the contact to start if are present problems to the inverter 60 connected with the electric motor 46 for the centrifugation of the waste with oil. At the control board 83 a push-button 88 is provided for activating the emergency stop. When the plant is started with the push-button 84, when the sensors 8 placed near the suction hose and the support body 7 with manual action, are activated, the inspiration begins. Said aspiration is delayed in its beginning from a timer 89 to permit to the operator to move and to put the suction hose in the right position without a not necessary aspiration. In the same time to the control board 83 are opening, by contacts, the electrovalves 10. Said electrovalves, acting on the pneumatic cylinders 11, open the ball valves if the use is for more machine tools. The timer 89 gives, in the defined times, impulse to the contactor 90 to put in motion the electric motor 26 for the aspiration with the starter 91. At the end of the aspiration put again the suction hose onto the seat of the support body 7, the operator stop the aspiration and the valves 3 are closed. The sensors 8 and the electrovalves 10 are in biunique correspondence. For the function of the plant near the tool, the activation and the disactivation are actuated rising of putting the suction hose 1 in the seat of the support body 7, in the same way for the use of the plant on the working plane or into the containers with waste and oil. On this base the aspiration begins each time that the operator puts the suction hose 1 from the support 7. The working of the waste with oil is started when a certain quantity of material inside the silo 12 is reached, detected from the sensor 20. Said cycle is delayed from a timer 92. Passing the delay wanted, said timer gives pulse to a second timer 93 that, after the provided delay, permits the opening to the cylinder 32 with the connected elements. With an other timer 94, with bigger times in comparison with the timer 93, and in the same way also the second cylinder 37 is opened with the connected elements to respect the sequence of opening and closing of the plates 30 and 35 in succession, with the requested times, and placed over and under the dosing chamber 34. Making this sequence there is the passage of a determined quantity of material from the silo 12 to the basket 43 for the centrifugation. Moreoverthis operation is actuated also when inside the silo 12 there is a depression. The sensor 41 presents in the cylinder 37 gives notice of the opening to the P.L.C. 95 which is the logic part of the plant. This then closes the contactor 96 and starts the material centrifugation by contact to the electric motor given to the contactor 97. The same contactor 97 gives impulse to the relay 98 for the function of the inverter 60 of the electric motor 46 for the cent ri fugat i on . The inverter 60 gives the wanted rotation to the basket 43 and it gives impulse to the timer 99 for the necessary time to do the centrifugation of the working material. After the time given to the timer 99, the same timer gives an impulse to a timer 100 that, at the end of the prestabilided time, gives an impulse to the relay 98 and to the stop centrifugal relay 101. The timer 100 moreover gives an impulse to the timer 102 connected with the electric cylinder 61 to go on and go out inside the basket 43 to make the cleaning of the working waste. The timer 102 gives an impulse also to the contactor 103 that starts the electric motor 66 with vacuum pump 67. The timer 102 gives in a second time a contact to the inverter 60 to the motion with reducedd speed. At the end of stroke of the electric cylinder 61, the sensor 65 gives an impulse tot he P.L.C. 95 and, at a determined numbers of impulse, the P.L.C. 95 gives an impulse to the timer 104 that gives the contact for the opening and the closing of double acting cylinder 72 to make falling the metallic worked material inside the container 75 placed under the silo 68. The regenerated oil into the collecting tank 52, when the level sensor 58 signals the high level, is pumped through the electric motor into the big dimension tank 59. At the control board 83 also a selector 105 is provided to start only the aspiration put on the silo 68 excluding all the other parts to do the cleaning of the previous parts. The working cycle goes on till the sensor 20 detects waste with oil inside the silo 12. The invented plant, other to haveeconomic advantages, has also an ecological function such as all the oil working is made inside containers and pipes hermitically closed so to avoid the dispersion in the ground or in the water. The invented plant is illustrated in an indicative and schematic way in the drawings of sheets 1 and 2. In sheet 1 - figure 1 is perspective view of the plant with a machine tool. In sheet 2 - figure 2 is frontal view of the other part of the plant to be placed in other room in comparison with the machine tools are placed.

## Claims

1. Plant for shavings processing and for the oil recovery having a rubber flexible intake pipe (2), an aerial inox piping (4) with supports (5), a pneumatic circuit, an electric part, silo (12,68), electric motors, aspiration plants, pneumatic cylinders, sensors, containers and a holed basket (43); **characterized in that**
- when the working waste products are formed, the operator takes the suction hose (1) from the support (7) and, through the aspiration plant, the waste and the oil are aspired from the collect ing tank positioned under working plane or near the workpiece; and that
- through the aerial piping (4) said waste with the oil come into a silo (12) equipped with an electric motor with an eccentric cam (25) so to avoid the deposit of the sucked up material onto the walls, with a controlled and definited vibration, and to favourite the flow toward the lower part where is a dosing chamber (34) closed with a plate (35) brings in opening, when requested, to a sensor (20); and that
- at the opening of said plate (35) the waste with oil fall inside a basket (43) with holes (44) placed onto all its surface and central hole (45) for the entering of the waste to be worked and having outside a containing tank (49) and a collecting pipe (50) for the centrifuged oil; and that
- said basket (43) is moved through an electric motor (46) so permitting, cetrinfuging the material, to devide the oil f rom the waste with the oil that goes, through a piping (50), into a tank (52) and from this, through a pipe (56) and electric motor (57), to a bigger container (59); and that
- at the end of the centrifuging phase, the basket (43) is emptied by an electric motor (66) that starts the aspiration with pipe (62) of the waste without oil that arrive in a second silo (68) with closing plate (72) the opening or closing of which is driven to a double acting cylinder (72); and that
- with the opening of the closing plate (71) the waste without oil fall down into a container (75) with lower rails (77) for its movement outside; and that
- all the phases inside the plants are started and coordinated through P.L.C.

2. Plant for shawings processing and for the oil recovery, as per claim 1, **characterized in that** to the aerial piping (4) a metallic support part (6) is connected for the supporting of the intake pipe (2) and of the suction hose (1) both positioned on the support body (7) easily opening from the operator.

3. Plant for shawings processing and for the oil recovery, as per claim 1 , **characterized in that** the silo (12) provides on the top vertical walls whereas in the lower part has walls (16) with a big slop met into a cone and with a sensor (20) that, connected to the electric and logic parts of the plant, determines the closing and the opening of the same silo (12) actuated by means of a plate (30) that moves horizontally inside the "L" guides (31) with movement started from the double acting cylinder (32).

4. Plant for shawings processing and for the oil recovery, as per claim 1, **characterized in that** the silo (12) has an opening (21) connected to a flexible pipe (22) with a suction hose (23) and sensor (24) for the upkeep and the cleaning.

5. Plant fo shawings processing and for the oil recovery, as per claim 1, **characterized in that** the intake plant comprises an electric motor (26) connected with the electric part and with a vacuum pump (27) so to form a depression able to suck the oil and the waste to the silo (12) through the pipe (28).

6. Plant for shawings processing and for the oil recovery, as per claim 1, **characterized in that** the basket (43) is brought in rotation through an electric motor (46) with drive shaft (47) and, ending the centrifuging phase with rotation driven to the inverter (60), the same basket (43) is empty with the waste without oil that through the aspiration pipe (62) arrive to the silo (68).

7. Plant for shawings processing and for the oil recovery, as per claim 1, **characterized in that** an electrovalve (10) is provided with the function to activate or disactivate the double acting cylinder (11) fed with the compressed air coming from an outside circuit to open or to close the ball valve (3).

8. Plant for shawings processing and for the oil recovery, as per claim 1, **characterized by** the fact the electric and the logic parts are placed inside of a control board (83) and all is started through a push-button (84) and the aspiration cycle is started to sensors (8) placed near the suction hoses.

9. Plant for shawings processing and for the oil recovery, as per claim 1, **characterized in that** are provided timers and contactors to actuate the different working phases.

10. Plant for shawings processing and for the oil recovery, as per claim 1, **characterized in that** the intake pipe (62) has a longitudinal opening (63) with a L-shaped steel foil laping the inside wall of the basket (43) so to scrape the vaste of the vertical wall and of the bottom of the basket (43).
